# EUROPEAN PATENT SPECIFICATION

(11) **EP 2 233 356 B1**
(45) Date of publication and mention of the grant of the patent: **06.11.2019**
(21) Application number: 08862133.9
(22) Date of filing: 05.12.2008
(51) Int. Cl.: B60Q 1/24, B60Q 1/50, B60Q 1/52, B60R 11/04, B60R 21/00, G08G 1/16

(54) **INFORMATION DISPLAY DEVICE**
INFORMATIONSANZEIGEVORRICHTUNG
DISPOSITIF D'AFFICHAGE D'INFORMATIONS

(30) Priority: 19.12.2007 JP 2007327302
(43) Date of publication of application: 29.09.2010
(73) Proprietor: Kabushiki Kaisha Toyota Chuo Kenkyusho, Nagakute-Cho Aichi-Gun Aichi 480-1192 (JP)
(72) Inventor: MURATA, Kanae, Aichi-gun Aichi 480-1192 (JP); SHIMAOKA, Keiichi, Aichi-gun Aichi 480-1192 (JP); AOYAGI, Isao, Aichi-gun Aichi 480-1192 (JP); FUJITSUKA, Norio, Aichi-gun Aichi 480-1192 (JP); OMURA, Yoshiteru, Aichi-gun Aichi 480-1192 (JP); MATSUBARA, Hiroyuki, Aichi-gun Aichi 480-1192 (JP)
(74) Representative: Kramer Barske Schmidtchen Patentanwälte PartG mbB
(86) International application number: PCT/JP2008/072174
(87) International publication number: WO 2009/078294

(56) References cited:
- EP-A1- 1 780 462
- JP-A- 2002 174 526
- JP-A- 2005 044 224
- JP-A- 2005 306 337
- JP-A- 2005 329 819
- US-A1- 2005 275 562
- US-B1- 6 281 806

## Description

### Technical Field

The present invention relates to an information display device.

### Related Art

Moving-body-use information display devices are known conventionally that, in order to notify a driver of specific information without requiring a large movement in gaze, display information to be visually discerned by a driver (driver) by projecting an image (for example, an image for guiding traffic direction at a cross-roads) on a road surface to (see, for example, Japanese Patent Application Laid-Open No. 2005-306337).

In the moving-body-use information display device described in Japanese Patent Application Laid-Open No. 2005-306337, an image is projected on a road surface by illuminating light from a light illumination unit onto the road surface.
EP 1 780 462 A1 discloses a process for modulated illumination of a road and a headlight using this process. The modular lighting procedure is effected by a headlight containing a number of separate light sources each producing a partial beam emitted in a predetermined direction. For avoiding dazzling of any road user, the modular lighting procedure detects critical zones and reduces the brightness of the head light of the vehicle in the critical zones.
US 2005/0275562 A1 discloses a vehicle lighting system for illuminating ahead of a vehicle provided with a plurality of light sources each adapted to illuminate a different illumination area to thereby form a predetermined light distribution pattern as a whole. It further discloses a control unit for determining a traffic scene in which the vehicle is running and independently changing at least either an orientation or the light qualities of the plurality of light sources so as to form a target light distribution pattern which has been set in advance for the traffic scene.
JP 2005 306337 A discloses an information display device for a mobile body that projects an image to guide a passing direction of an intersection on a road surface of a travelling direction side of a motorcycle based on guide data provided by a portable navigation device.

### Disclosure of the Invention

### Problem to be Solved by the Invention

However, in the moving-body-use information display device described in Japanese Patent Application Laid-Open No. 2005-306337, a problem arises that, since an image is projected on a road surface by illuminating light on the road surface, when headlights are lit, due to the light from these headlights, an image projected on the road surface, namely the shape of the light illuminated on the road surface, becomes difficult for a driver to discern. Due thereto, sometimes the information expressed by the image projected on the road surface cannot be notified to the driver.

The present invention is one that solves the above problem, and an object thereof is to provide an information display device that can notify specific information to a driver without requiring a large movement in the gaze of the driver, and can more reliably notify the specific information even when there is peripheral light present, such as from headlights or the like.

### Method of Solving the Problem

In order to achieve the above object, an information display device of the first example is configured including: a detection unit that detects a person; danger level estimation unit that estimates the danger level from a subject vehicle of the person detected by the detection unit; an in-danger estimation unit that estimates whether or not the person detected by the detection unit is in danger from the subject vehicle, based on the danger level estimated by the danger level estimation unit; an illumination unit that illuminates light in the direction of a road surface; brightness level reduction unit that reduces the brightness level of light to a part of an illuminated portion of the light on the road surface; and a control unit that, when estimated to be in danger by the in-danger estimation unit, controls the brightness level reduction unit such that information urging the driver of the subject vehicle to be careful is displayed by a black cut-out pattern (a reduced brightness level portion) where the brightness level of light is reduced in an illuminated portion of the light on the road surface. The control unit is adapted to control various display states of the black cut-out pattern, wherein the display position on the road surface of the black cut-out pattern indicates the direction of the person from the subject vehicle and the illumination position thereof moves in sequence from the subject-vehicle towards the person estimated to be in danger from the subject vehicle.

According to the information display device of the present example, since the direction to the person estimated to be in danger and the separation distance to the person are displayed by the reduced brightness level portion where the brightness level of light is reduced in the illuminated portion of the light on the road surface, the attention can be attracted both of the driver and the person, irrespective of the color of the clothing of the person, and also specific information, namely the direction of the person estimated to be in danger and the separation distance to the person, can be notified to the driver without requiring a large movement in gaze, and this information can be more reliably notified even in the presence of peripheral light, such as from headlights or the like.

By controlling the brightness level reduction unit so as to move the position on the road surface of the reduced brightness level portion towards the person estimated to be in danger from the subject vehicle, when attracting the attention of the driver and the person estimated to be in danger, the driver does not experience an odd sensation since the reduced brightness level portion displayed on the road surface does not move towards the driver.

Further, the control unit of the present example may control the brightness level reduction unit such that the movement speed of the position gets faster as the danger level estimated by the danger level estimation unit gets higher. By so doing, attracting the attention of both the driver and the person can be more effectively performed as the danger level gets higher.

Further, the control unit of the present example may further control the brightness level reduction unit such that the movement direction of the person estimated to be in danger is displayed by the reduced brightness level portion. By so doing, the driver can be notified of the movement direction of the person.

Further, the control unit of the present example can control the brightness level reduction unit in any of the following manners:
- control the brightness level reduction unit such that a line of the reduced brightness level portion extending from the subject vehicle to the person, indicating the direction of the person estimated to be in danger, and a line of the reduced brightness level portion extending sideways just in front of the person, indicating the separation distance from the subject vehicle to the person, are displayed on the road surface;
- control the brightness level reduction unit such that the position on the road surface of at least one of the reduced brightness level portion(s) moves from the subject vehicle towards the person, in order to indicate the direction of the person estimated to be in danger;
- control the brightness level reduction unit such that the position on the road surface of at least one of the reduced brightness level portion(s) moves from the subject vehicle towards the person, and the reduced brightness level portion splits at a point in time when it arrives just in front of the person, and the positions on the road surface of each of the split reduced brightness level portions move respectively to the left and right, in order to indicate the direction of the person estimated to be in danger and the separation distance to the person;
- control the reduced brightness level portion such that, a line of the reduced brightness level portion extending sideways just in front of the person, indicating the separation distance to the person estimated to be in danger, and at least one of the reduced brightness level portion(s) whose position moves on the road surface from the subject vehicle towards the person in order to indicate the direction of the person, are displayed on the road surface; and
- control the brightness level reduction unit such that as the danger level estimated by the danger level estimation unit gets higher, control is made such that at least one of a shape, an intermittent state, and/or a movement path of the position on the road surface of the reduced brightness level portion is controlled to raise the attention grabbing effect.

Further, in order to achieve the above object, an information display device of a second example is configured including: a detection unit that detects a person; a danger level estimation unit that estimates the danger from a subject vehicle of the person detected by the detection unit; an in-danger estimation unit that estimates whether or not the person detected by the detection unit is in danger from the subject vehicle, based on the danger level estimated by the danger level estimation unit; illumination unit that illuminates light in the direction of a road surface; an brightness level reduction unit that reduces the brightness level of light to a part of an illuminated portion of the light on the road surface; and a control unit that, when estimated to be in danger by the in-danger estimation unit, controls the brightness level reduction unit such that information urging the driver of the subject vehicle to be careful is displayed by a reduced brightness level portion where the brightness level of light is reduced in an illuminated portion of the light on the road surface.

According to the information display device of the present example, when estimated to be in danger, since information urging the driver of the subject vehicle to be careful is displayed by a reduced brightness level portion where the brightness level of light is reduced in an illuminated portion of the light on the road surface, the attention of the driver can be attracted irrespective of the color of the clothing of the person. Further, according to the information display device of the present example, by the information urging the driver of the subject vehicle to be careful being displayed by the reduced brightness level portion, the attention can also be attracted of the person seeing the displayed reduced brightness level portion. Further, according to the information display device of the present example, specific information, namely information urging the driver of the subject vehicle to be careful, can be notified to the driver without requiring a large movement in gaze, and this information can be more reliably notified even in the presence of peripheral light, such as from headlights or the like.

Further, the control unit described above can further control the brightness level reduction unit such that, when estimated to be in danger by the in-danger estimation unit, the brightness level is reduced of light illuminated to a portion of a specific range including the position of the eyes of the person estimated to be in danger. By so doing, a dazzled state of the person, due to light being illuminated into the eyes of the person estimated to be in danger, can be prevented.

Further, the brightness level reduction unit described above can reduce the brightness level of light to a part of the illuminated portion of light on the road surface by reducing or blocking the light illuminated by the illumination unit.

Further, in order to achieve the above object, an information display device of a third example is configured including: an illumination unit that illuminates light in the direction of a road surface; a brightness level reduction unit that reduces the brightness level of light to a part of an illuminated portion of the light on the road surface; a position detection unit that detects its own position; display-use road information generation unit that generates display-use road information relating to a road on which it is positioned itself, based on the position detected by the position detection unit and map information that includes information relating to road(s) on which vehicles travel; and a control unit that controls the brightness level reduction unit such that the display-use road information generated by the display-use road information generation unit is displayed by a reduced brightness level portion where the brightness level of light is reduced in an illuminated portion of the light on the road surface.

According to the information display device of the present example, since the display-use road information relating to the road on which it is positioned itself is generated, and the generated display-use road information is displayed by the reduced brightness level portion on the road surface, specific information, namely the information relating to the road on which it is positioned itself, can be notified to the driver without requiring a large movement in gaze, and this information can be more reliably notified even in the presence of peripheral light, such as from headlights or the like.

Further, the display-use road information can be information expressing the shape in the forward progression direction of the road on which it is positioned itself, or the speed limit of the road on which it is positioned itself.

### Effect of the Invention

As explained above, according to the information display devices of the first, second and third present examples, an effect is obtained in which, since specific information, such as the direction to a person estimated to be in danger and the separation distance to the person, information for stopping movement of a subject vehicle, display-use road information related to the road on which it is positioned itself, or the like, is displayed by a reduced brightness level portion where the brightness level is reduced of light in an illumination portion of light on the road surface, the driver can be notified of the specific information without a large movement in gaze, and the specific information can be more reliably notified even in the presence of peripheral light, such as from headlights or the like.

### Brief Description of the Drawings

FIG. 1A is a schematic diagram showing a first exemplary embodiment of the present invention.
FIG. 1B is a schematic diagram showing the first exemplary embodiment of the present invention.
FIG. 2 is a block diagram of an information display device of the first exemplary embodiment.
FIG. 3 is a flow chart showing a processing routine of control processing performed by a CPU of a control device of an information display device of the first exemplary embodiment.
FIG. 4 is a diagram for explaining the processing performed in a step S60 and a step S70 in the control processing of the first exemplary embodiment.
FIG. 5 is a diagram for explaining the processing performed in a step S60 and a step S70 in the control processing of the first exemplary embodiment.
FIG. 6 is a diagram showing a display state 1.
FIG. 7 is a diagram showing a display state 2.
FIG. 8 is a diagram showing a display state 3.
FIG. 9 is a diagram showing a display state 4.
FIG. 10 is a diagram showing a display state 5.
FIG. 11 is a diagram showing a display state 6.
FIG. 12 is a diagram showing a display state 7.
FIG. 13 is a diagram showing a display state 8.
FIG. 14 is a diagram showing a display state 9.
FIG. 15 is a diagram showing a display state 10.
FIG. 16 is a diagram showing a display state 11.
FIG. 17A is a diagram showing an example where the brightness level is reduced of light illuminated onto a portion of a specific range including the position of the eyes of a person estimated to be in danger.
FIG. 17B is a diagram showing an example where the brightness level is reduced of light illuminated onto a portion of a specific range including the position of the eyes of a person estimated to be in danger.
FIG. 17C is a diagram showing an example where the brightness level is reduced of light illuminated onto a portion of a specific range including the position of the eyes of a person estimated to be in danger.
FIG. 17D is a diagram showing an example where the brightness level is reduced of light illuminated onto a portion of a specific range including the position of the eyes of a person estimated to be in danger.
FIG. 17E is a diagram showing an example where the brightness level is reduced of light illuminated onto a portion of a specific range including the position of the eyes of a person estimated to be in danger.
FIG. 17F is a diagram showing an example where the brightness level is reduced of light illuminated onto a portion of a specific range including the position of the eyes of a person estimated to be in danger.
FIG. 17G is a diagram showing an example where the brightness level is reduced of light illuminated onto a portion of a specific range including the position of the eyes of a person estimated to be in danger.
FIG. 18A is a schematic diagram showing a second exemplary embodiment of the present invention.
FIG. 18B is a schematic diagram showing the second exemplary embodiment of the present invention.
FIG. 19 is a block diagram of the information display device of the second exemplary embodiment.
FIG. 20 is a flow chart showing a processing routine of road information display processing performed by a CPU of a control device of an information display device of the second exemplary embodiment.
FIG. 21 is a diagram of an example of reduced brightness level portion displayed by the road information display processing.
FIG. 22 is a diagram of an example of reduced brightness level portion displayed by the road information display processing.
FIG. 23 is a diagram of an example of reduced brightness level portion displayed by the road information display processing.

### Best Mode of Implementing the Invention

Detailed explanation follows of each exemplary embodiment of the information display device of the present invention, with reference to the drawings.

### First Exemplary Embodiment

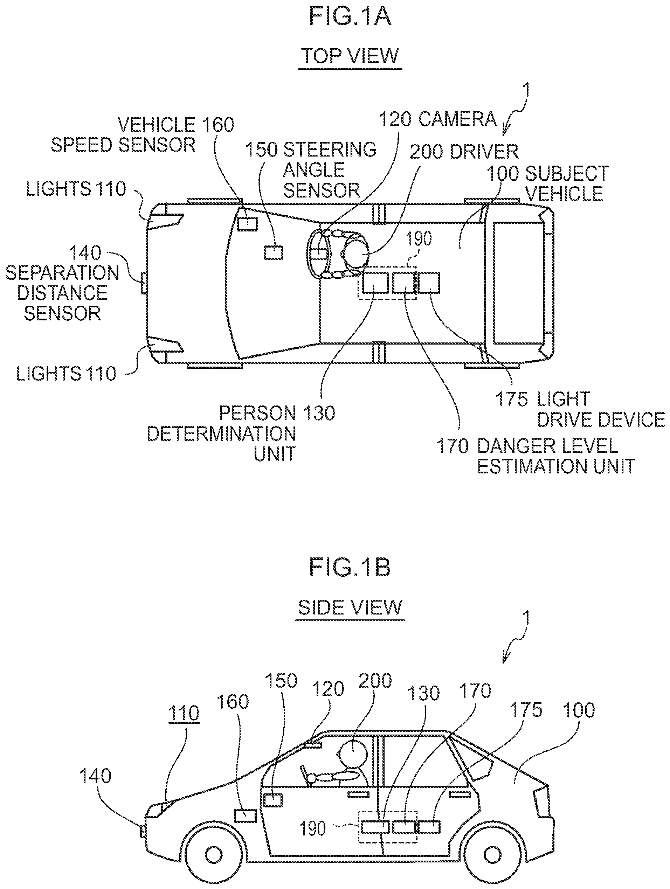

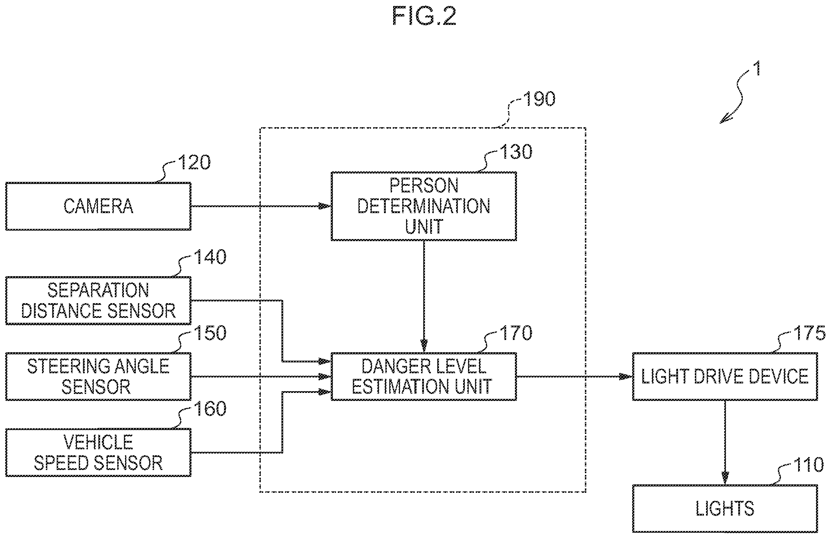

First, explanation follows regarding a first exemplary embodiment. As shown in FIG. 1A, FIG. 1B, and FIG. 2, lights 110 that illuminate light in the direction of a road surface, a camera 120, a separation distance sensor 140, a steering angle sensor 150, a vehicle speed sensor 160 and a control device 190 are provided to an information display device 1, attached to a vehicle 100.

An infrared camera (a near infrared camera or a far infrared camera) is, for example, employed as the camera 120, and the camera 120 captures an image in the forward direction of the subject vehicle 100, and outputs the obtained captured heat image as heat image data. The camera 120 is connected to the control device 190. Note that a visible light camera may also, for example, be employed as the camera 120.

The control device 190 is configured as a microcomputer, including: a CPU; ROM stored with a program for executing a processing routine for control processing, described in detail later, and a each program for processing routines of various processing; and RAM that temporarily stores data. When the microcomputer that executes control processing is represented as functional blocks, the control device 190 can be represented as a person determination unit 130 and a danger level estimation unit 170. The person determination unit 130 loads the heat image data from the camera 120. The danger level estimation unit 170 loads a detection signal (separation distance signal) from the separation distance sensor 140, a detection signal (steering angle signal) from the steering angle sensor 150, and a detection signal from a vehicle speed sensor 160, expressing the speed of the subject vehicle 100, and outputs instructions to the light drive device 175.

The person determination unit 130, based on the heat image data from the camera 120, detects the characteristics of a person (for example, the temperature, the shape, or the like) by performing image processing, such as, for example, pattern matching or the like, and detects a person, such as, for example, a pedestrian positioned in front of the subject vehicle 100, a driver in a vehicle, or the like. The person determination unit 130 is connected to the danger level estimation unit 170.

The separation distance sensor 140 employs, for example, millimeter wave radar, and the separation distance sensor 140 detects the separation distance to the person detected by the person determination unit 130. The relative movement speed and the relative position of the person (the separation distance to the person from the subject vehicle 100, and the direction of the position of the person relative to the subject vehicle 100) are then derived from the detected separation distance.

The steering angle sensor 150 detects the steering angle of a steering wheel. The movement direction of the subject vehicle 100 is then derived from the detected steering angle. Further, the vehicle speed sensor 160 detects the revolution speed of the vehicle wheels. The movement speed of the subject vehicle 100 is then derived from the detected vehicle wheel revolution speed.

The danger level estimation unit 170, based on a separation distance signal from the separation distance sensor 140, computes the relative movement speed and the relative movement direction of the person relative to the subject vehicle 100, and computes the movement speed of the person from a difference between the computed relative movement speed of the person and the movement speed of the subject vehicle 100 that was computed based on the detection signal from the vehicle speed sensor 160. Further, the danger level estimation unit 170 computes the movement direction of the person from a difference between the computed relative movement direction of the person and a movement direction of the subject vehicle 100 that was computed based on the steering angle signal from the steering angle sensor 150.

Further, the danger level estimation unit 170 estimates the danger level of the person from the subject vehicle 100, based on the computed movement speed and movement direction of the subject vehicle 100, and on the computed movement speed and movement direction of the person.

The danger level estimation unit 170 also estimates whether or not the person is in danger from the subject vehicle 100 by comparing the estimated danger level with a reference value.

When the danger level estimation unit 170 estimates that the person detected by the person determination unit 130 is in danger, the danger level estimation unit 170 outputs an instruction to the light drive device 175 to display a reduced brightness level portion, described in detail below, on the road surface to attract the attention of the driver and the person. For example, the danger level estimation unit 170 outputs to the light drive device 175 an instruction to display the direction of the person estimated to be in danger from the subject vehicle 100 and the separation distance of the person by a reduced brightness level portion where the brightness level of light is reduced in a part of the illuminated portion of light on the road surface.

The light drive device 175 that is connected to the lights 110 is also connected to the danger level estimation unit 170. The light drive device 175 controls a focused illumination device of the light 110, described in detail below, based on the instruction from the danger level estimation unit 170. By so doing, the light drive device 175 controls light for illumination and also, by controlling a light distribution control device of the lights 110, described in detail below, controls, for example, the shape, the intermittent state, the illumination position, the movement of the illumination position, and/or the like of the reduced brightness level portion where the brightness level of light is reduced in a part of the illuminated portion of light on the road surface.

The lights 110 include an LED array, or a projector, capable of encompassing the illumination range of low-beam and high-beam, and is configured with the focused illumination device (not shown in the figures) that illuminates light towards the road surface, and the light distribution control device (not shown in the figures) that controls the light distribution of light illuminated from the focused illumination device.

The light illuminated from the focused illumination device is not limited to visible light, and infrared or ultraviolet light may be employed therefor. However, in cases where infrared light or ultraviolet light is employed, an additional device is provided that enables a driver to discern the infrared light or ultraviolet light, such as, for example, head mounted display so as to make the infrared light or ultraviolet light discernable by the driver.

The light distribution control device can be configured by a reflection spatial light modulation device, such as, for example, a Digital Micromirror Device (DMD) for controlling light distribution by reflecting the light of the focused illumination device, or by a transmission spatial light modulation device, such as, for example, a liquid crystal display device for controlling the light distribution by transmitting the light of the focused illumination device. Further, the light distribution control device can reduce the brightness level of light in a part of the illuminated portion of light on the road surface by reducing light or blocking light in the light from the focused illumination device. Thereby, the reduced brightness level portion, where the brightness level of light is reduced in a part of the illuminated portion of light on the road surface, is displayed.

In the lights 110, a specific reduced brightness level portion can be obtained by driving the light distribution control device and illuminating the light from the focused illumination device so as to obtain the specific reduced brightness level portion, or by driving the light distribution control device in a state in which light is illuminated from the focused illumination device so as to obtain the specific reduced brightness level portion.

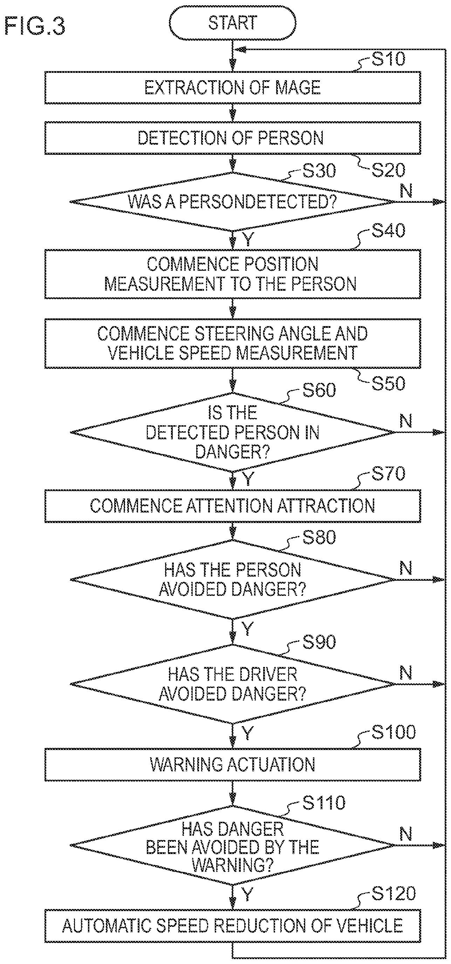

FIG. 3 is a flow chart showing a processing routine of control processing performed by the CPU in the control device 190 of the information display device 1 of the present exemplary embodiment.

This processing routine is executed when the power supply (not shown in the figures) of the information display device 1 is turned on. Explanation follows below of an example where the CPU executes the control processing when the subject vehicle 100 is performing high-beam illumination.

First, at step S10, the camera 120 is driven, the heat image obtained by capture in the forward direction of the subject vehicle 100 is loaded as heat image data, and at the next step S20, detection is performed for a person positioned in front of the subject vehicle 100 based on the heat image data.

At the next step S30, determination is made as to whether or not a person was detected at step S20. When determination is negative, the processing routine returns to step S10 and detection for a person continues. However, when determination is positive, the processing routine proceeds to the next step S40.

At step S40, the separation distance signal output from the separation distance sensor 140 is loaded, and computation is commenced of the relative movement speed and relative position of the person detected at step 30, relative to the subject vehicle 100.

At the next step S50, the steering angle signal output from the steering angle sensor 150 is loaded, computation of the movement direction of the subject vehicle 100 is commenced, and also the detection signal expressing the movement speed of the subject vehicle 100 detected by the vehicle speed sensor 160 is loaded, and computation of the movement speed of the subject vehicle 100 is commenced.

At the next step S60, the movement speed and movement direction of the person is computed, based on the computed movement direction and movement speed of the subject vehicle 100 and based on the computed relative movement speed and relative position of the person. The danger level to the person from the subject vehicle 100 is then estimated, based on the computed movement speed and movement direction of the person, and based on the computed movement direction and movement speed of the subject vehicle 100. Estimation is made as to whether or not the person is in danger from the subject vehicle 100 by comparing the estimated danger level to a reference value.

When it estimated here that the person is not in danger, the processing routine returns to step S10 and the processing explained above is repeated. However, the processing routine proceeds to the next step S70 when it is estimated that the person is in danger.

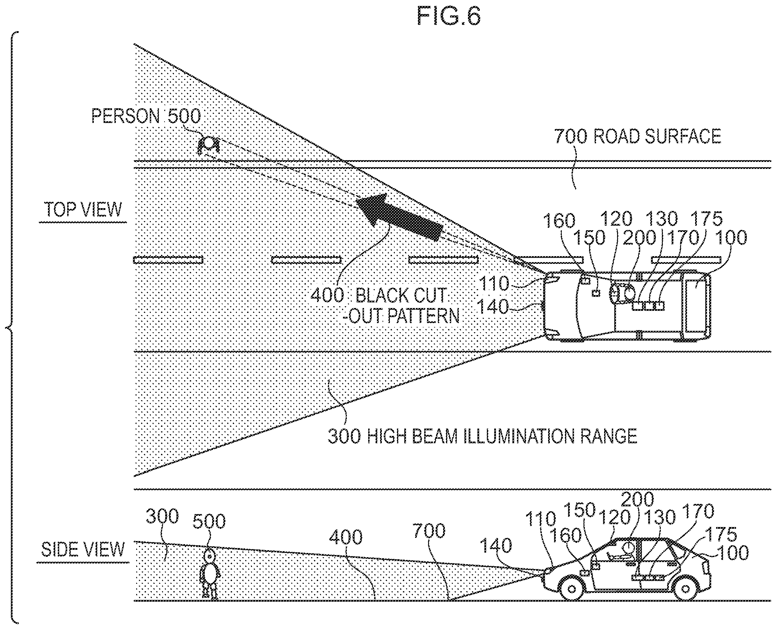

At step S70, based on the relative movement speed and relative position of the person estimated to be in danger at step S60, an instruction is output to the light drive device 175 to display the reduced brightness level portion, respectively illustrated in each of FIG. 6 to FIG. 16, as explained below, on the road surface in order to attract the attention of the driver 200 and the person. Namely, at step S70, as illustrated in FIG. 6 to FIG. 16 respectively, for example, an instruction is output to the light drive device 175 instructing the direction of the person estimated to be in danger from the subject vehicle 100, and the separation distance to the person, to be displayed by a reduced brightness level portion where the brightness level of light is reduced in a part of the illuminated portion of light on the road surface. Due thereto, the light drive device 175, serving as control unit, controls the light distribution control device, serving as brightness level reduction unit, such that the direction of the person estimated to be in danger, and the separation distance to the person, is displayed by a reduced brightness level portion, where the brightness level of light is reduced in a part of the illuminated portion of light on the road surface. Note that explanation follows where a black cut-out pattern where the brightness level is close to zero (namely, a reduced brightness level portion that appears to a human as having a color close to black) is employed as the reduced brightness level portion for display on the road surface.

Explanation follows of an example of processing performed in step S60 and step S70.

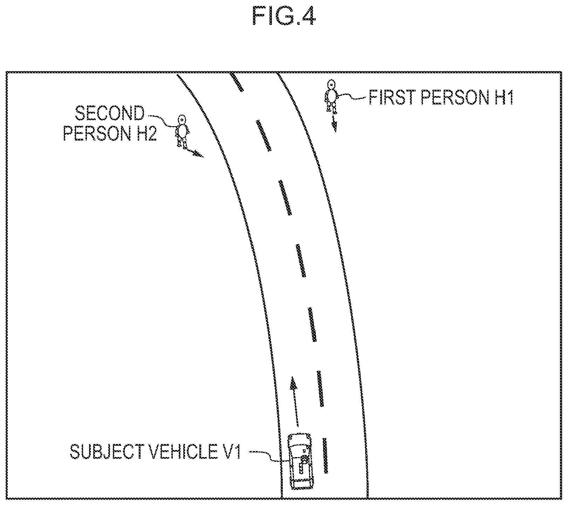

As shown in FIG. 4, explanation follows of an example of circumstances where there is a person H1 and a person H2 present in front of a subject vehicle V1 that is approaching a left hand curve.

In such a case, at step S60, the CPU of the control device 190 computes the relative movement speeds and relative positions of the detected person H1 and person H2, based on the separation distance signal from the separation distance sensor 140. Then, based on these computed relative movement speeds and relative positions, and based on the computed movement direction and movement speed of the subject vehicle 100, the movement speed and movement direction of the person H1 and person H2 is repeatedly computed, and changes in separation distance and changes in position of the person H1 and person H2 are derived. Then, the movement speed and movement direction of the person H1 and person H2 is estimated based on the derived changes in separation distance and changes in position.

Then, in step S60, the CPU of the control device 190 repeatedly computes the movement direction of the subject vehicle V1 based on the steering angle signal loaded from the steering angle sensor 150, and derives a change in the movement direction of the subject vehicle V1. Further, the movement speed of the subject vehicle V1 is repeatedly computed based on the detection signal loaded from the vehicle speed sensor 160, and derives the change in movement speed of the subject vehicle V1. Then, the movement speed and movement direction of the subject vehicle V1 are estimated based on the change in movement direction and change in movement speed of the subject vehicle V1.

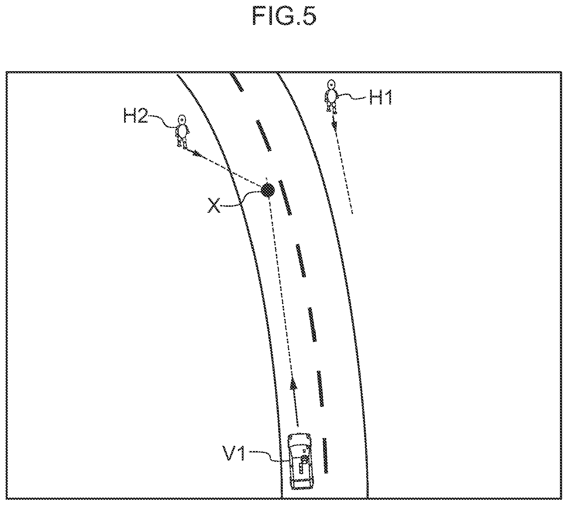

Next, at step S60, the CPU of the control device 190 derives probabilities of collision of the subject vehicle V1 with the person H1 and the person H2, based on the estimated movement speeds and movement directions of the person H1 and person H2 and on the estimated movement speed and movement direction of the subject vehicle V1. Then whether or not the person H1 and person H2 are in danger from the subject vehicle V1 is estimated by comparing the derived probabilities with a specific value thereof. For example, as shown in FIG. 5, when it is estimated that there is a high probability of collision of the subject vehicle V1 with the person H2 at a ground point X after a duration of time t (after 6 seconds, for example) that is within a specific duration of time tₘₐₓ, namely when it is estimated that the person H2 is in danger from the subject vehicle V1, at step S70, the CPU of the control device 190 performs the following processing. At step S70, based on the movement speed and movement direction of the person H2, and on the separation distance to the person H2 and the direction to the person H2 from the subject vehicle V1, the an instruction to the light drive device 175 is output to display one of the black cut-out patterns respectively illustrated in FIG. 6 to FIG. 16, explained below, on the road surface in order to attract the attention of the driver 200 and the person H2. The instruction output to the light drive device 175 is, for example, to display on the road surface a black cut-out pattern indicating the direction of the person H2 estimated to be in danger from the subject vehicle V1 and the separation distance to the person H2, or to display on the road surface a black cut-out pattern of information urging the driver of the subject vehicle V1 to be careful. By so doing, the light drive device 175 controls the light distribution control device such that the direction of the person estimated to be in danger and the separation distance to that person is displayed by a reduced brightness level portion where the brightness level of light is reduced in a part of the illuminated portion of light on the road surface. Alternatively, the light drive device 175 controls the light distribution control device such that information urging the driver of the subject vehicle V1 to be careful is displayed by a reduced brightness level portion. Note that the period of time t until estimated collision represents a danger level, and the danger level is higher as the numerical value gets smaller.

In the next step S80, determination is made as to whether or not, by the attention attracting performed in step S70, the person estimated to be in danger has noticed the approaching subject vehicle 100 and avoided the danger. For example, determination is made that danger has been avoided when, by detecting the movement in the position of the heat image data of the person estimated captured by the camera 120 to be in danger, it is detected that the person has stopped or moved in a direction to avoid the danger. Determination is made that the danger has not been avoided when it is detected that the person has not stopped and is still moving in the same direction. When the person is detected to have stopped or moved in a direction to avoid the danger, namely when it is determined that the danger has been avoided, the processing routine returns to step S10, and the processing explained above is repeated. However, when it is detected that the person has not stopped and is still moving in the same direction, namely, when determination is made that the danger has not been avoided, the processing routine proceeds to step S90.

At step S90, determination is made as to whether or not the driver 200 has noticed approaching close to the person and avoided the danger. For example, estimation is made as to whether or not the person estimated to be in danger from the subject vehicle 100 at step S60 is still in danger, and determination is made as to whether or not danger has been avoided based on this estimation result.

When the driver 200 has noticed the person approaching and avoided the danger, determination is made that the danger has been avoided when the danger level falls of the person estimated to be in danger from the subject vehicle 100 at step S60 or the person is estimated not to be in danger from the subject vehicle 100, due, for example, to the driver 200 reducing the speed of the subject vehicle 100 or changing the direction of travel. Then, an instruction is output to the light drive device 175 to stop the display, commenced at step S70 of the reduced brightness level portion with the lights 110, in order to attract attention, the processing routine returns to step S10, and the processing explained above is repeated. However, determination is made that danger has not been avoided when it is estimated that there is still a danger, with there being no reduction in the danger level to the person estimated to be in danger from the subject vehicle 100 at step S60, and the processing routine proceeds to step S100.

At step S100, an instruction to issue a warning is output to a warning device (not shown in the figures) in order to alert the driver 200 of the person approaching the subject vehicle 100.

At the next step S110, determination is made as to whether or not, due to the warning issued by the warning device at step S100, the driver 200 has noticed the person approaching and avoided the danger. For example, determination is made that the danger has been avoided when, for example, the danger level falls of the person estimated to be in danger from the subject vehicle 100 at step S60 and the person is estimated not to be in danger from the subject vehicle 100, due to the driver 200 reducing speed or changing the direction of travel of the subject vehicle 100. Then, the processing routine returns to step S10 and the processing explained above is repeated. However, when the danger level to the person from the subject vehicle 100 does not fall, and it is estimated that a danger still exists, determination is made that danger has not been avoided and the processing routine proceeds to step S120.

At step S120, in order to reduce the speed of the subject vehicle 100, an instruction to reduce speed to a specific speed is output to a vehicle speed control unit (not shown in the figures) that controls the vehicle speed of the subject vehicle 100. Due thereto, the speed of the subject vehicle 100 is reduced to the specific seed, and the possibility of a collision between the person estimated to be in danger and the subject vehicle 100 can be reduced.

Then, the processing routine returns to step S10 and the processing explained above is repeated.

Note that step S10 to step S30, and step S80 of the present control routine are executed by the person determination unit 130, and step S40 to step S70, and step S90 to step S120 are executed by the danger level estimation unit 170.

FIG. 6 to FIG. 16 are diagrams showing various display states (display state 1 to display state 11) of reduced brightness level portions (black cut-out patterns in the examples given below) displayed by the lights 110 under control of the light drive device 175 input with the instruction output from the control device 190 at step S70 of the present control routine. Note that the hashed portion shown with the annotation 300 in the respective FIG. 6 to FIG. 16 illustrates the illumination range of high-beam.

### Display State 1

As shown in FIG. 6, a black cut-out pattern 400 of an arrow shape is displayed on a straight line on a road surface 700 connecting the subject vehicle 100 to a person 500, so as to indicate the direction of the person 500. Note that plural individual arrow shaped black cut-out patterns 400 may be arrayed along the straight line that connects the subject vehicle 100 to the person 500.

Further, the shape of the arrow black cut-out pattern 400 may be elongated such that the leading end of the arrow shaped black cut-out pattern 400 is displayed just in front of the person 500. By so doing, the direction of the person 500 and the separation distance to the person 500 is displayed by the arrow shaped black cut-out pattern 400.

### Display State 2

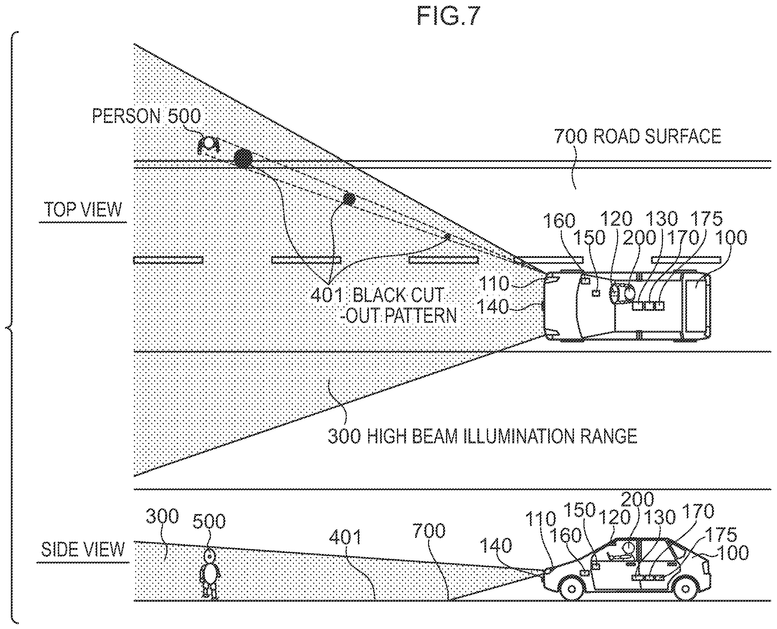

As shown in FIG. 7, plural individual (three individual in the example of FIG. 7) round black cut-out patterns 401 are displayed on a straight line on the road surface 700 connecting the subject vehicle 100 to the person 500, so as to indicate the direction in which the person 500 is present. Note that in the example of FIG. 7, round black cut-out patterns 401 are displayed, however, the present invention is not limited thereto, and any shape may be employed for the black cut-out pattern 401 as long as they are discernable by the driver 200. For example, the shape of the black cut-out pattern 401 may be a triangle shape, a square shape , a rectangle shape, a star shape, or the like.

Further, in the high beam illumination range 300, plural of the individual round black cut-out patterns 401 may be displayed in front of the subject vehicle 100 from positions nearest to the subject vehicle 100 up to just in front of the person 500. By so doing, the direction of the person 500 and the separation distance to the person 500 is displayed by the plural individual round black cut-out patterns 401.

### Display State 3

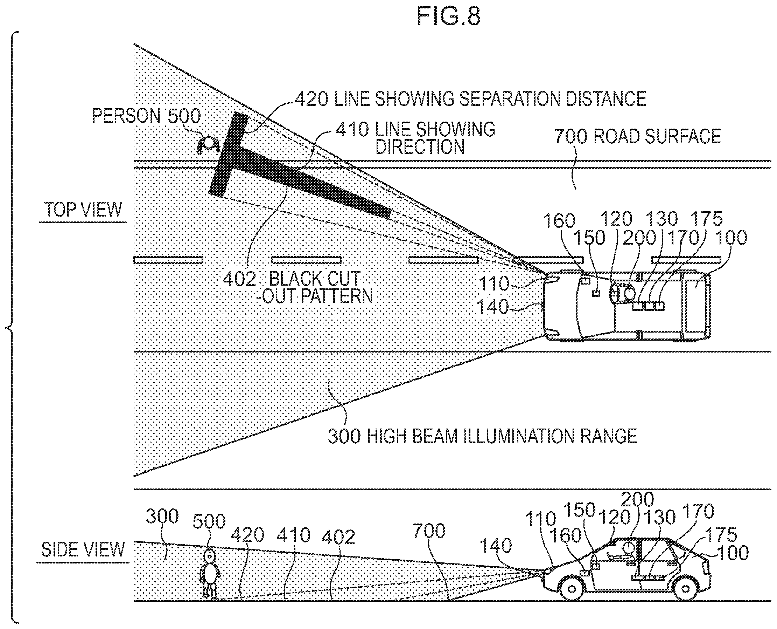

As shown in FIG. 8, a T-shaped black cut-out pattern 402 is displayed on the road surface 700 towards the person 500. As shown in the figure, a line 410 extending to the person 500 from the subject vehicle 100 is a line of the black cut-out pattern 402 that indicates the direction of the person 500 from the subject vehicle 100, and a line 420 that extends out sideways just in front of the person 500 is a line of the black cut-out pattern 402 that indicates the separation distance from the subject vehicle 100 to the person 500.

### Display State 4

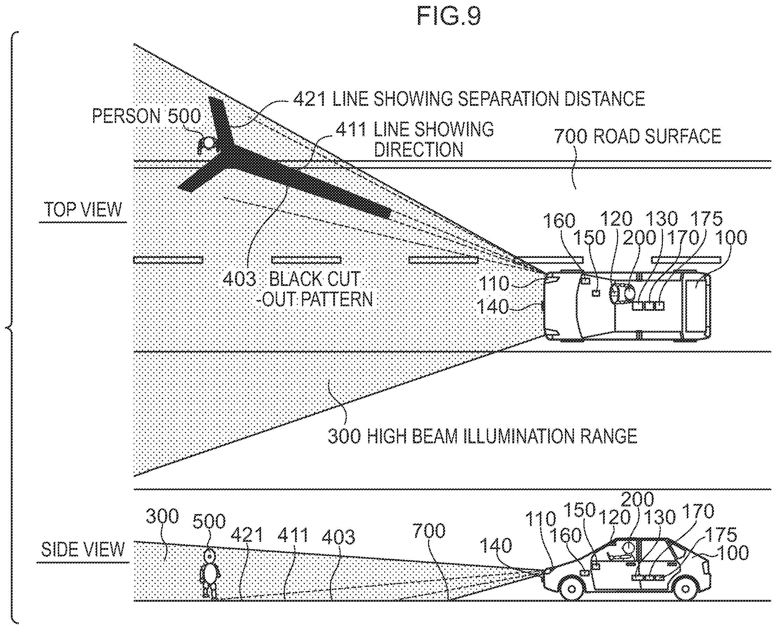

As shown in FIG. 9, a Y-shaped black cut-out pattern 403 is displayed on the road surface 700 towards the person 500. As shown in this figure, a line 411 extending from the subject vehicle 100 to the person 500 is a line of the black cut-out pattern 403 that indicates the direction of the person 500 from the subject vehicle 100, and a line 421 (the line 421 extending out to the sides) that forks just in front of the person 500 is a line of the black cut-out pattern 403 that indicates the separation distance from the subject vehicle 100 to the person 500.

### Display State 5

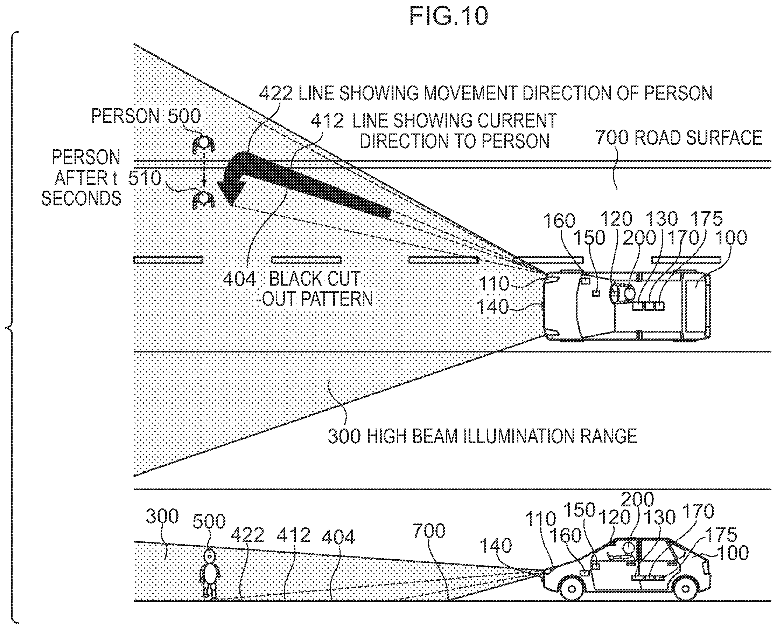

As shown in FIG. 10, an arrow shaped black cut-out pattern 404 is illuminated on the road surface 700, indicating the movement direction of the person 500 estimated by the danger level estimation unit 170. As shown in this figure, the line 412 extending from the subject vehicle 100 to the person 500 is a line of the black cut-out pattern 404 that indicates the direction of the person 500 from the subject vehicle 100 at the current point in time. Further, line 422, with a curve just in front of the person 500 and an arrow at the leading end, is a line of the black cut-out pattern 404 that indicates the separation distance from the subject vehicle 100 to the person 500, and is also a line of the black cut-out pattern 404 that indicates the movement direction of the person 500.

Note that in each of the display states shown in FIG. 6 to FIG. 10, control may be performed such that, as the danger level estimated by the danger level estimation unit 170 to the person 500 increases, the attention value, drawing the attention of the driver 200 to focus on inherently moving bodies and bodies that stand out, is increased. Specifically, the control device 190 at step S70 of the current control processing, may output an instruction to the light drive device 175 to make the shape of the black cut-out pattern bigger such that the attention value to the driver is increased. In a similar manner, the control device 190 may output an instruction to the light drive device 175 to make the black cut-out pattern intermittent in an appropriate manner, such that the attention value to the driver is increased at step S70 according to the danger level of the person 500. Note that as such an instruction, for example, an instruction may be made that, as well as making the black cut-out pattern intermittent, gradually shortens the intermittent period of the flashing as the danger level to the person 500 increases.

Further, the arrow indicating the movement direction of the person 500 in the display state 5 shown in FIG. 10 (the shape of the black cut-out pattern 404) may be one obtained by the movement path of the display position on the road surface 700 obtained by moving a specific shape (for example a round shape) black cut-out pattern from the subject vehicle 100 towards the person 500. Further, in order to increase the attention value as the danger level to the person 500 estimated by the danger level estimation unit 170 increases, at step S70 of the present control routine, the control device 190 may output an instruction to the light drive device 175 to make the movement path bigger. By so doing the attention effect on a user is raised.

### Display State 6

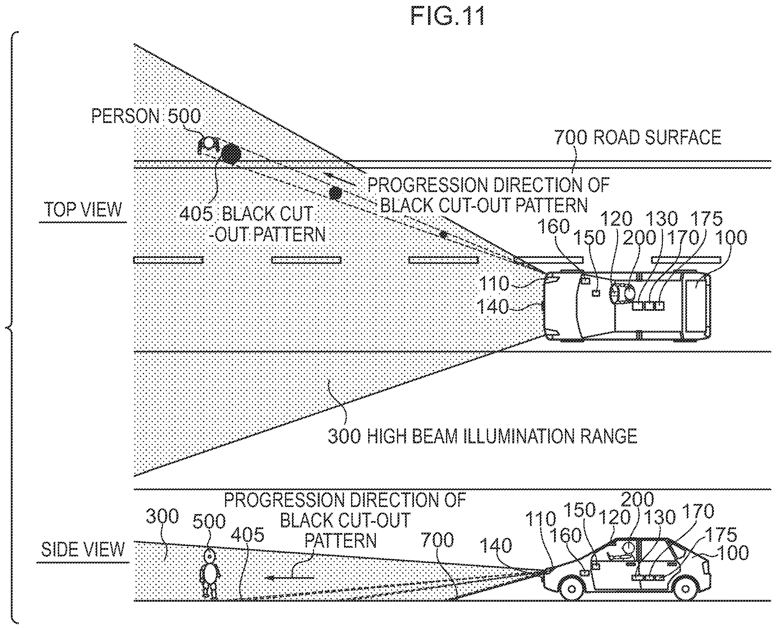

As shown in FIG. 11, the display position on the road surface 700 of a single black cut-out pattern 405 moves from the subject vehicle 100 towards the person 500. The movement direction of this display position indicates the direction of the person 500 from the subject vehicle 100. Such movement of the display position on the road surface 700 of a single black cut-out pattern 405 has a high attention grabbing effect on the driver 200, and the effect in making the person 500 estimated to be in danger aware is also high.

### Display State 7

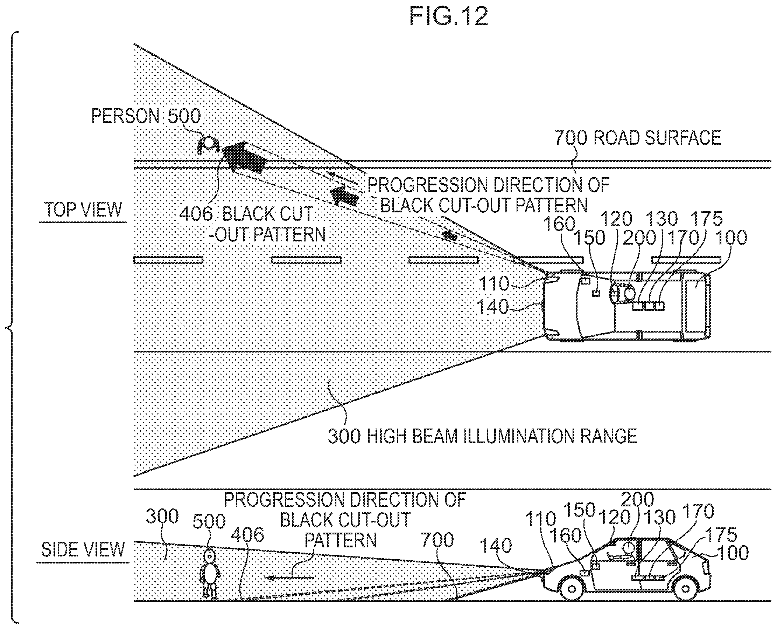

As shown in FIG. 12, the display position on the road surface 700 of the arrow shaped black cut-out pattern 406 moves from the subject vehicle 100 towards the person 500. The movement direction of this display position indicates the direction of the person 500 from the subject vehicle 100. Such movement of the display position on the road surface 700 of the arrow shaped black cut-out pattern 406, in a similar manner to the movement of the single black cut-out pattern 405 shown in FIG. 11, has a high attention grabbing effect on the driver 200, and the effect in making the person 500 estimated to be in danger aware is also high. Further, the driver 200 can instantly identify the direction of the position of the person 500 by displaying the arrow.

### Display State 8

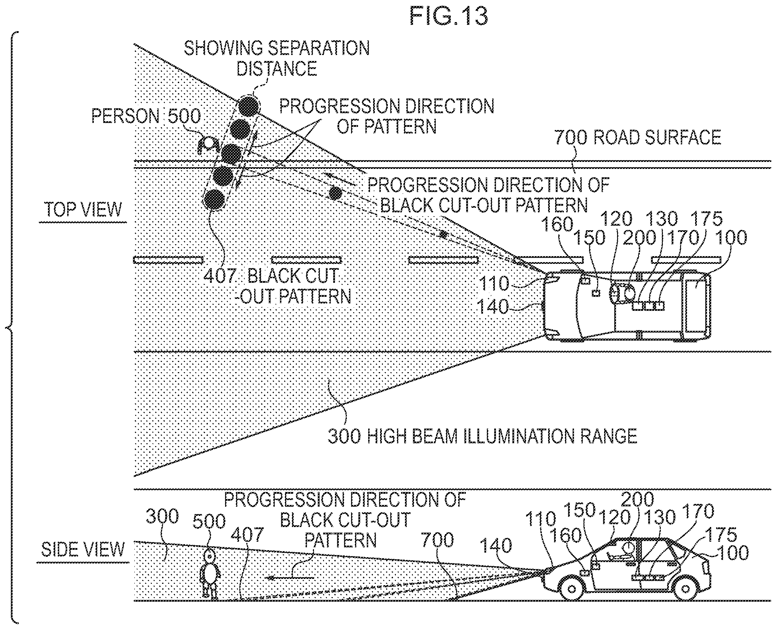

As shown in FIG. 13, the display position on the road surface 700 of a single black cut-out pattern 407 moves from the subject vehicle 100 towards the person 500. The movement direction of the display position indicates the direction of the person 500 from the subject vehicle 100. Then, the display position on the road surface 700 splits just in front of the person 500, and moves to the left and right. The black cut-out pattern 407 that has separated just in front of the person 500 indicates the separation distance of the person 500 from the subject vehicle 100.

### Display State 9

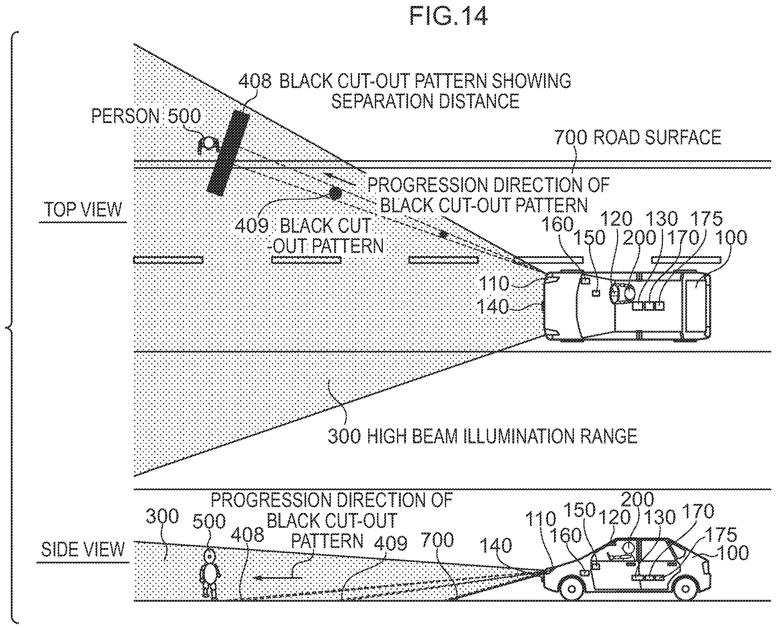

As shown in FIG. 14, in the display state 9 a black cut-out pattern 408 and a black cut-out pattern 409 are displayed on the road surface 700. The black cut-out pattern 408 is displayed constantly stationary and indicates the separation distance of the person 500 from the subject vehicle 100. The black cut-out pattern 409 indicates the direction of the person 500 from the subject vehicle 100, and the illumination position thereof moves on the road surface 700 from the subject vehicle 100 towards the person 500.

### Display State 10

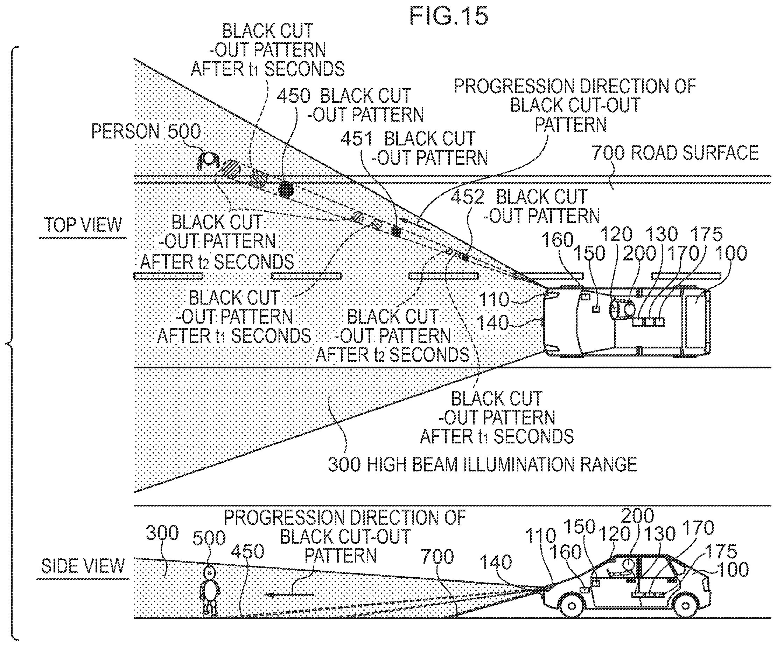

As shown in FIG. 15, the display positions on the road surface 700 of plural black cut-out patterns 450, 451, and 452 move, in sequence, from the subject vehicle 100 towards the person 500. The movement direction of these display positions indicates the direction of the person 500 from the subject vehicle 100.

The display state 10 is one in which the single black cut-out pattern 405 of the display state 6 explained in FIG. 11 have been made into plural thereof, and the inventors have experienced the effect of having plural thereof through experimentation. Explanation follows below of the results of such investigations. When the display position on the road surface 700 of the single black cut-out pattern 405 is moved from the subject vehicle 100 towards the person 500, the person 500 estimated to be in danger can be accurately discerned from the perspective of the driver 200. However, it has been found that from the perspective of the person 500, the person 500 feels fear due to the high speed that the single black cut-out pattern 405 approaches towards the person 500 side from the subject vehicle 100. Consequently, the plural black cut-out patterns 450, 451, and 452 were disposed on the straight line towards the person 500 from the subject vehicle 100, and their display positions on the road surface 700 moved from the subject vehicle 100 towards the person 500. When this occurs, it has been found that, due to the presence of the second and third black cut-out patterns 451 and 452, the fear of the person 500 is reduced in comparison to when the display position on the road surface 700 of the single black cut-out pattern 405 is moved from the subject vehicle 100 towards the person 500.

Note that in each of the black cut-out patterns of FIG. 11 to FIG. 15, control may be performed such that the attention grabbing effect is raised, the higher the danger level to the person 500 estimated by the danger level estimation unit 170. For example, in the step S70 of the present control routine, the control device 190 may output an instruction to the light drive device 175 to increase the movement speed of the display position on the road surface 700, to make the shape bigger, to change the shape or to make it intermittent, to shorten the on-off period of an intermittent state, or to make the movement path of the display position bigger.

For example, when the period of time t until collision between the subject vehicle 100 and the person 500 is a first specific period of time (for example 6 seconds) or less, the control device 190 may output an instruction to the light drive device 175 to display with the lights 110, with the number of black cut-out patterns being one, such that the speed of movement of the display position on the road surface of the black cut-out pattern is a specific speed Vf. Further, for example, when the period of time t until collision is greater than the first specific period of time and is a second specific period of time or less (greater than 6 seconds but not greater than 10 seconds, for example), an instruction maybe output to the light drive device 175 to display with the lights 110 with the number of black cut-out patterns being one, such that the speed of movement of the display position of the black cut-out pattern on the road surface is a specific speed Vs. Further, for example, when the period of time t until collision is greater than the second specific period of time (for example 10 seconds), an instruction may be output to the light drive device 175 to display with the lights 110 a plural number of black cut-out patterns such that the speed of movement of the display position of the black cut-out patterns on the road surface is the specific speed Vs. The relationship of the specific speed Vf and specific speed Vs here is represented by Vf > Vs.

### Display State 11

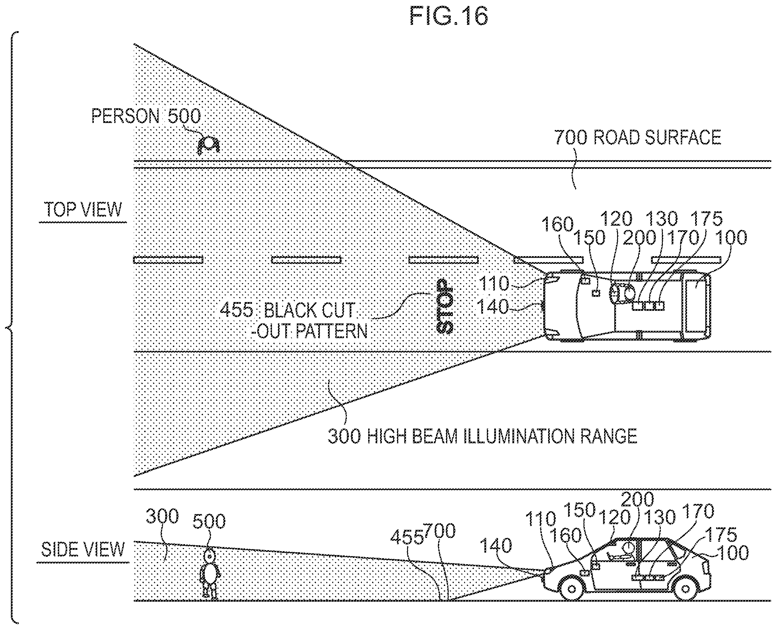

As shown in FIG. 16, information urging the driver 200 of the subject vehicle 100 to be careful (information representing the character string of "STOP" in the example in FIG. 16) is displayed by a black cut-out pattern 455 of a character string expressing information urging the driver 200 of the subject vehicle 100 to be careful. By so doing, the attention of the driver can be attracted. Further, by displaying the information urging the driver 200 of the subject vehicle 100 to be careful by the black cut-out pattern 455, the attention is also attracted of a person seeing the displayed black cut-out pattern 455.

The first exemplary embodiment is explained above. The information display device 1 of the present exemplary embodiment, as explained above, detects the person 500, estimates the danger level to the detected person 500 from the subject vehicle 100, and, based on the estimated danger level, estimates whether or not the detected person 500 is in danger from the subject vehicle 100. When estimated to be in danger, the information display device 1 controls the light distribution control device so as to reduce the brightness level of a part of the illuminated portion of light, such that the direction of the person 500 estimated to be in danger, and the separation distance to the person 500, is displayed by a reduced brightness level portion, this being a portion where the brightness level is reduced in a part of the illuminated portion of light on the road surface 700 from the focused illumination device that illuminates light in the direction of the road surface.

Consequently, according to the information display device 1 of the present exemplary embodiment, since the direction of the person 500 estimated to be in danger, and the separation distance to the person 500, is displayed by the reduced brightness level portion where the brightness level of light is reduced in a part of the illuminated portion of light on the road surface, the attention can be attracted both of the driver and the person, irrespective of the color of the clothing of the person 500. Further, information of the direction of the person 500 estimated to be in danger, and the separation distance to the person 500, can be notified to the driver without requiring a large movement in gaze, and this information can be more reliably notified even in the presence of peripheral light, such as from headlights or the like.

Further, the information display device 1 of the present exemplary embodiment, as explained above, detects the person 500, estimates the danger level to the detected person 500 from the subject vehicle 100, and estimates whether or not the detected person 500 is in danger from the subject vehicle 100 based on the estimated danger level. When danger is estimated to be present, the information display device 1 controls a light distribution control device so as to reduce the brightness level of a part of the illuminated portion of light, such that information urging the driver 200 of the subject vehicle 100 to be careful is displayed by a reduced brightness level portion (a black cut-out pattern in the example described above), this being a portion where the brightness level is reduced in a part of the illuminated portion of light on the road surface 700 from the focused illumination device that illuminates light in the direction of the road surface.

Consequently, according to the information display device 1 of the present exemplary embodiment, when it is estimated that danger is present, due to information urging the driver 200 of the subject vehicle 100 to be careful being displayed as a reduced brightness level portion where the brightness level of light is reduced in a part of the illuminated portion of light on the road surface 700, the attention of the driver 200 can be attracted irrespective of the color of the clothes of the person 500. Further, according to the information display device 1 of the present exemplary embodiment, by displaying with the reduced brightness level portion information urging the driver 200 of the subject vehicle 100 to be careful, the attention of the person 500 seeing the displayed reduced brightness level portion can also be attracted. Further, according to the information display device 1 of the present exemplary embodiment, information urging the driver 200 of the subject vehicle 100 to be careful can be notified to the driver 200 without requiring a large movement in gaze, and this information can be more reliably notified even in the presence of peripheral light, such as from headlights or the like.

Note that with the black cut-out pattern 455 shown in FIG. 16, control may be executed such that the attention grabbing effect is raised the higher the danger level of the person 500 estimated by the danger level estimation unit 170. For example, at the step S70 of the present control routine, the control device 190 may output an instruction to the light drive device 175 to change the shape thereof, make the size thereof bigger, make it intermittent, or make the on-off period of an intermittent state shorter.

Further, in the respective display states of each of the display state 1 to the display state 11, at step S70 the control device 190 outputs an instruction to the light drive device 175, instructing the light drive device 175 to reduce the brightness level of light illuminated at a portion of a specific range including the position of the eyes of the person 500 estimated to be in danger, such that the brightness level of light illuminated at the portion of the specific range including the eyes of the person 500 estimated to be in danger at step S60 is reduced. By so doing, due to the light drive device 175 controlling the light distribution control device so as to reduce the brightness level in the portion of the specific range including the position of the eyes of the person 500 estimated to be in danger, a dazzled state of the person 500, due to light being illuminated into the eyes of the person 500, can be prevented.

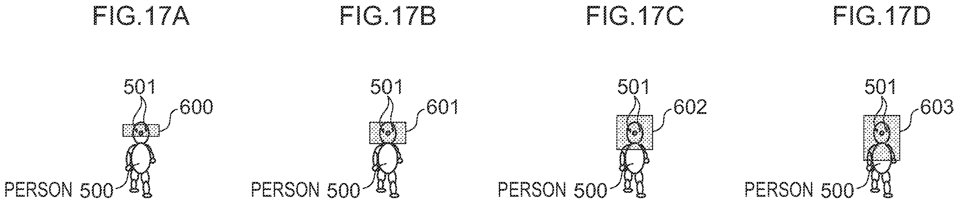

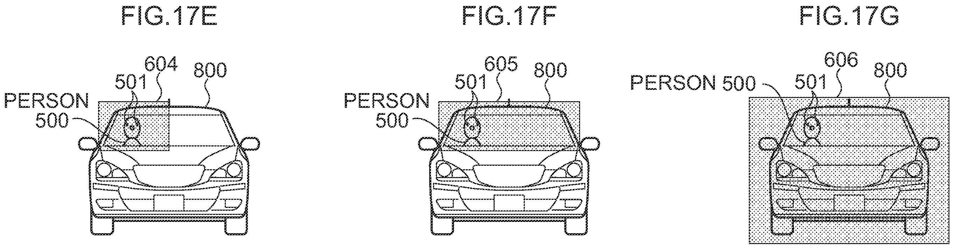

Regarding a more specific method, for example, the position of the eyes of the person 500 estimated to be in danger can be detected by performing image processing, by pattern matching or the like, based on heat image data from the camera 120. Then, when an instruction is output to the light drive device 175 to lower the brightness level illuminated to a portion of the specific range including the detected position 501 of the eyes of the person 500, as shown in FIG. 17A, the brightness level of light illuminated is reduced to a portion 600 of the specific range including the position 501 of the eyes of the person 500. Note that respective examples are shown in FIG. 17B, FIG. 17C, and FIG. 17D of the specific range for reducing the brightness level including the position 501 of the eyes of the person 500, these being a portion 601 of the entire face of the person 500, a portion 602 from the shoulders up of the person 500, and a portion 603 of the upper body of the person 500. Further, FIG. 17E shows detection of the position of a driver in an oncoming vehicle 800 by performing image processing, such as pattern matching or the like, based on the heat image data from the camera 120, and illustrates a portion 604 including the driver of an oncoming vehicle 800 as the specific range where the brightness level is reduced. Note that FIG. 17E is an example in which the oncoming vehicle 800 is postulated to be a so-called right hand drive vehicle, and in cases where the oncoming vehicle 800 is a so-called left hand drive vehicle, the brightness level is reduced of light illuminated to a portion including the driver positioned on the corresponding position on the left hand side. Further, FIG. 17F shows detection of the front windshield of the oncoming vehicle 800, by performing pattern matching or the like based on the heat image data from the camera 120, and illustrates a portion 605 including the entire front windscreen of the oncoming vehicle 800 as the specific range where the brightness level is reduced. Further, FIG. 17G, shows detection of oncoming vehicle 800 and the illumination of the lights of the oncoming vehicle 800, by performing image processing such as by pattern matching or the like based on the heat image data from the camera 120, and illustrates a portion 606 of the entire oncoming vehicle 800 as the specific range where the brightness level is reduced.

### Second Exemplary Embodiment

Explanation follows regarding a second exemplary embodiment. Note that the same reference numerals are allocated to similar configuration and similar processing to that of the first exemplary embodiment, and explanation thereof is omitted.

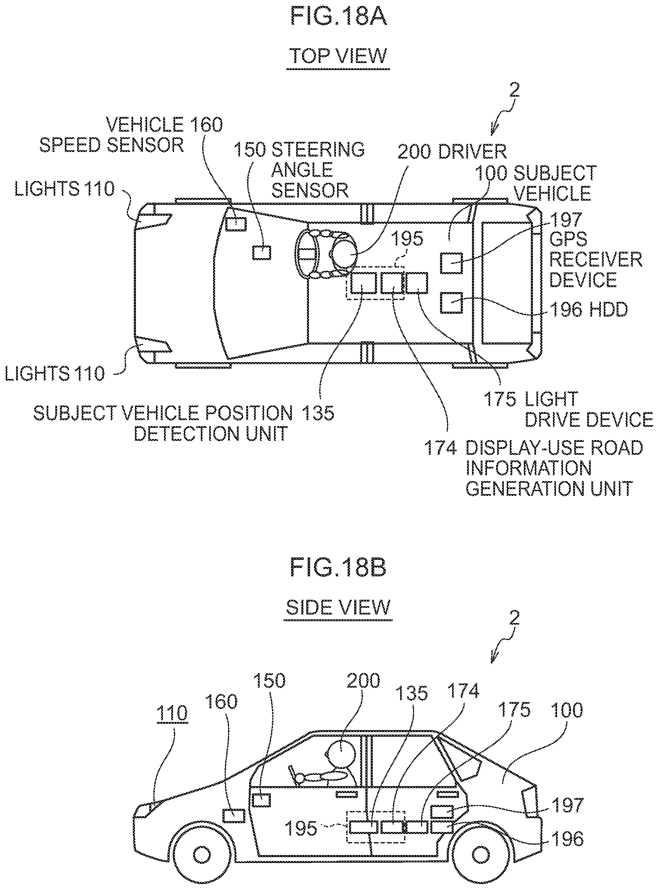

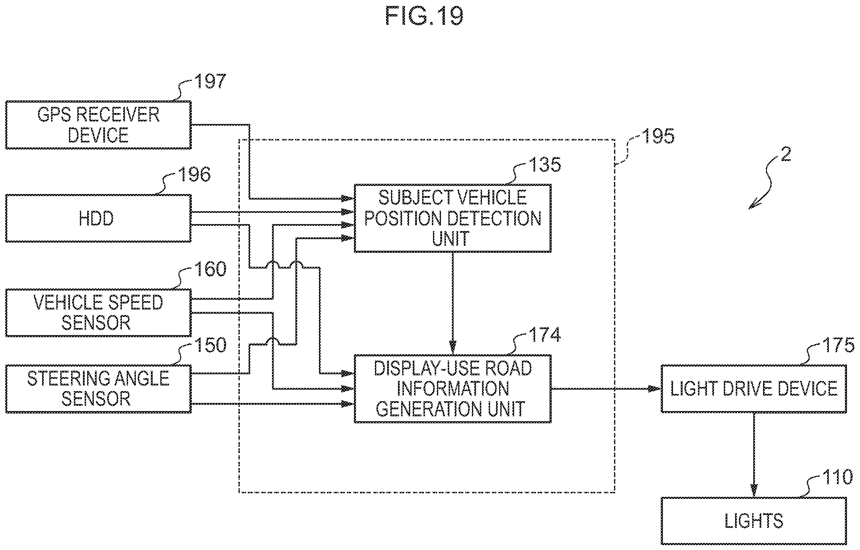

As shown in FIG. 18A, FIG. 18B and FIG. 19, lights 110 that illuminate light in the direction of a road surface, a steering angle sensor 150, a vehicle speed sensor 160, a Hard Disk Drive (HDD) 196 serving as map information storage unit on which map information (map data) is stored, a GPS receiver device 197 that receives radio waves from a GPS satellite, and a control device 195 are provided to an information display device 2, attached to a vehicle 100.

The map information stored on the HDD 196 is configured to include plural links that configure roads on maps. Further, positional data on the maps of the respective plural links and information of the speed limits for cases when vehicles travel on the respective plural links, are included in the map information so as to be corresponded against the respective of the plural links.

The control device 195 is configured as a microcomputer, including: a CPU; ROM stored with a program for executing processing routines of road information display processing, described in detail later, and each program for processing routines of various processing; and RAM that temporarily stores data. When the microcomputer that executes road information display processing is represented as functional blocks, the control device 195 can be represented as a subject vehicle position detection unit 135 and a display-use road information generation unit 174.

The subject vehicle position detection unit 135 by detecting the position of the information display device 2, by performing conventionally known map matching techniques or the like, based on position information expressed in radio waves from GPS satellites received by the GPS receiver device 197, and on map information stored on the HDD 196, detects the position of the subject vehicle 100 to which the information display device 2 is provided. Note that the subject vehicle position detection unit 135 may compute the distance and direction the subject vehicle 100 has progressed, based on a detection signal (separation distance signal) from the separation distance sensor 140 and a detection signal (steering angle signal) from the steering angle sensor 150, so as to detect anew the position of the subject vehicle 100 by adding the computed separation distance and direction to the above detected position of the subject vehicle 100 (dead-reckoning).

The display-use road information generation unit 174 generates the display-use road information, this being information relating to the road at the detected position of the subject vehicle 100 by the subject vehicle position detection unit 135, and outputs to the light drive device 175 an instruction to display the generated display-use road information by a reduced brightness level portion where the brightness level is reduced in a part of the illuminated portion of light on the road surface. The light drive device 175 thereby controls the light distribution control device such that a part of the illuminated portion of light is reduced so as to display the generated display-use road information by the reduced brightness level portion.

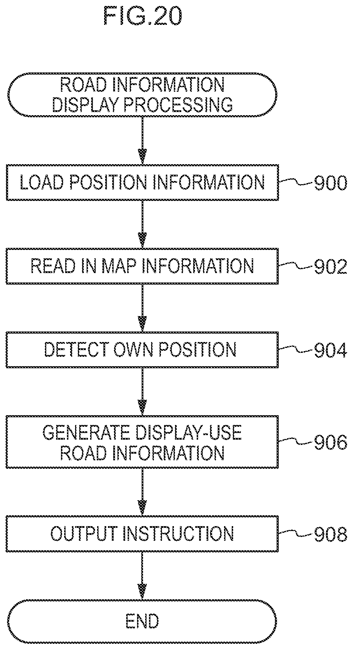

FIG. 20 is a flow chart showing a processing routine of road information display processing performed by the CPU in the control device 195 of the information display device 2 of the present exemplary embodiment.

This road information display processing is executed when the power source (not shown in the figures) of the information display device 2 is turned on, and then at specific intervals (10 msec, for example). Note that explanation follows below of an example where the CPU executes the road information display processing when the subject vehicle 100 is performing high-beam illumination.

First, at step S900, position information expressed in radio waves from GPS satellites received by the GPS receiver device 197 is loaded from the GPS receiver device 197.

At the next step S902, the map information stored in the HDD 196 is read in.

At the next step S904, the position of the subject vehicle 100 (the position of the vehicle, namely its own position) is detected based on the loaded position information expressed by the radio waves from the GPS satellites, and the read-in map information. Note that, as explained above, the position of the subject vehicle 100 may be detected anew by computing the separation distance and direction progressed of the subject vehicle 100, based on the detection signal (separation distance signal) from the separation distance sensor 140 and the detection signal (steering angle signal) from the steering angle sensor 150, and adding the computed separation distance and direction to the detected position of the subject vehicle 100 (dead-reckoning).

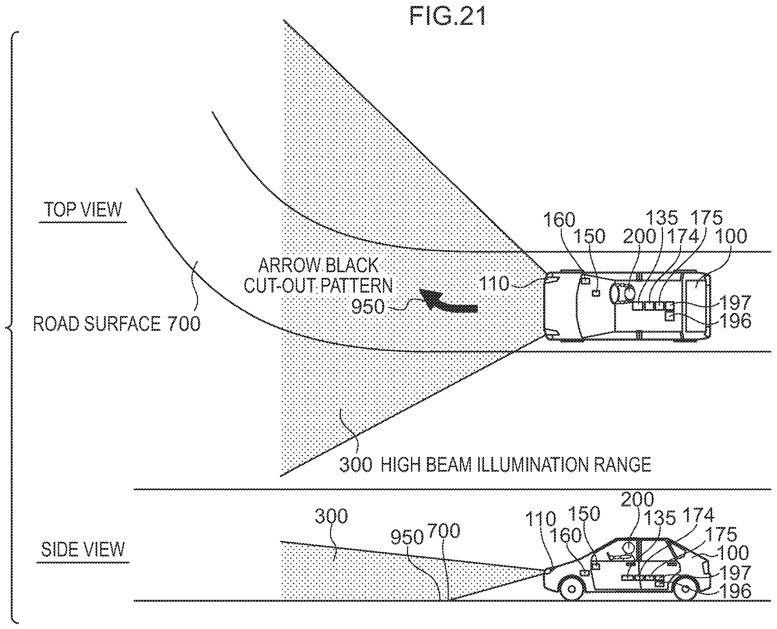

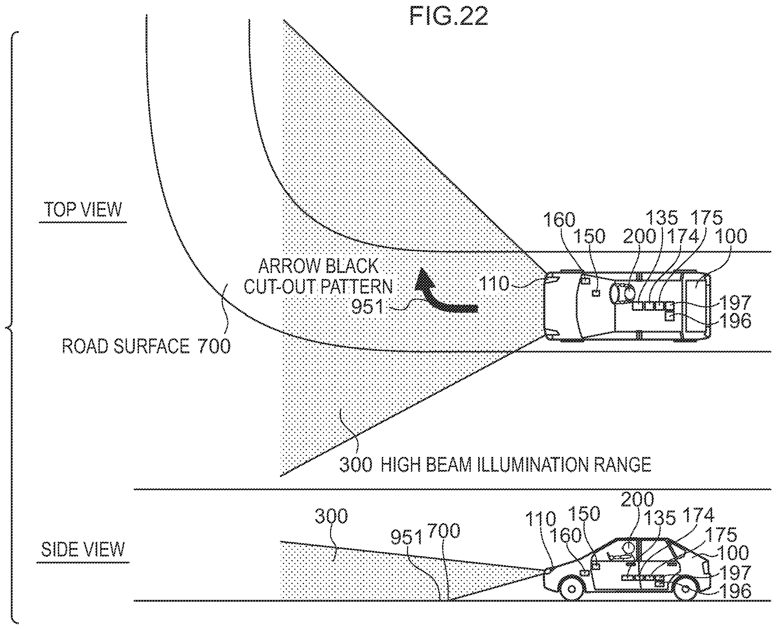

At the next step S906, the display-use road information is generated, this being information related to the road where the subject vehicle 100 is positioned. For example, the road on which the subject vehicle 100 is traveling is identified from the map information using the position of the subject vehicle detected at above step S904. Then, links that configure the identified road and that are links disposed in the forward direction of travel of the subject vehicle 100 are extracted, and the extracted links are traced out in the progression direction of the subject vehicle 100. Then, from the position information of each of the links, the shape (for example, curving to the right, curving to the left, and the like) ahead of the progression direction of the road on which the subject vehicle 100 is travelling is estimated, and by generating information expressing its shape (for example, when curving to the right, an arrow curving to the right expressing the curve to the right (described in detail later using FIG. 21 and FIG. 22)), display-use road information is generated related to the road on which the subject vehicle 100 is positioned. By so doing, by tracing out each of the links configuring the road on which the subject vehicle 100 is positioned, and using the position information of each of the links, since the shape of the road is estimated, and information expressing the shape of the road is generated as display-use road information, display-use road information that is related to the road can be generated according to the shape of the road. For example, display-use road information expressing a shape (for example, information expressing an arrow, or the like) can be generated according to the radius of curvature of the road.

At the next step S908, an instruction to display the display-use road information relating to the road on which the subject vehicle 100 is positioned, generated at step S906, by the reduced brightness level portion where the brightness level is reduced, a part of which being the illuminated portion of light on the road surface 700, is output to the light drive device 175.

Thereby, for example, when the shape ahead in the progression direction of the road on which the subject vehicle 100 is travelling is a gentle curve towards the right, as shown in FIG. 21, display-use road information expressing that the shape ahead in the progression direction of the road on which the subject vehicle 100 is travelling is a gentle curve to the right is displayed on the road surface 700 by the gently curving arrow black cut-out pattern 950.

Further, for example, when the shape ahead in the progression direction of the road on which the subject vehicle 100 is travelling is a sharp curve to the right, as shown in FIG. 22, display-use road information expressing that the shape ahead in the progression direction of the road on which the subject vehicle 100 is travelling is a sharp curve to the right is displayed on the road surface 700 by the sharply curving arrow black cut-out pattern 951.

The current road information display processing is then ended.

The present exemplary embodiment is explained above. The information display device 2 of the present exemplary embodiment, as explained above, detects its own position (of the subject vehicle 100 or of the information display device 2 mounted to the subject vehicle 100), and generates display-use road information related to the road on which it is itself positioned, based on the detected position and on map information including information relating the road on which the vehicle is travelling. The information display device 2 controls the light distribution control device to reduce the brightness level of a part of the illuminated portion of light, so as to display the generated display-use road information by a reduced brightness level portion where the brightness of the light is reduced in a part of the illuminated portion of light on the road surface 700 from the focused illumination device that illuminates light in the road surface 700 direction.

Consequently, according to the information display device 2 of the present exemplary embodiment, display-use road information is generated relating to the road on which it is positioned itself, and since the generated display-use road information is displayed by the reduced brightness level portion on the road surface 700, information related to the road on which he himself is positioned can be notified to the driver 200 without needing a large movement in gaze of the driver, and this information can be reliably notified to the driver even when there is peripheral light present, such as, for example, from headlights or the like.

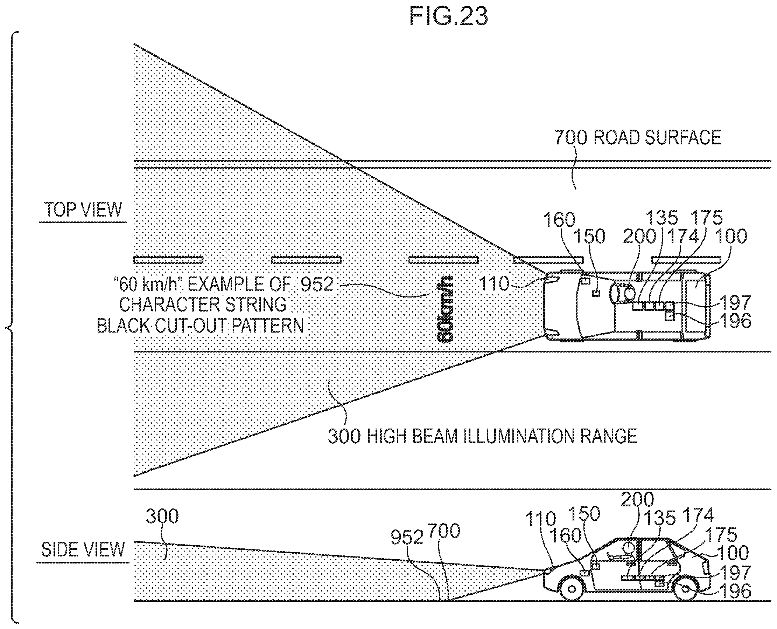

Note that while explanation has been given of an example in the present exemplary embodiment when information expressing the shape ahead in the progression direction of the road on which the subject vehicle 100 is travelling is generated at step S906 as the display-use road information, the present invention is not limited thereto. For example, at step S906, the link on which the subject vehicle 100 is traveling may be identified from the map information using the position of the subject vehicle detected at above step S904, and the speed limit corresponding to the identified link acquired. Then, display-use road information may be generated by generating information expressing the acquired speed limit (for example, when the acquired speed limit is 60 km/h, information expressing the character string of "60 km/h", (described in detail below with reference to FIG. 23)). By so doing, for example, when the speed limit of the road on which the subject vehicle 100 is traveling is 60 km/h, then display-use road information expressing the speed limit of the road on which the subject vehicle 100 is travelling is displayed on the road surface 700 by a "60 km/h" character string black cut-out pattern 952 as shown in FIG. 17A,.

Further, in the present exemplary embodiment, configurations of the above information display device 1 may be further provided. For example, in the present exemplary embodiment, in a similar manner to in the above first exemplary embodiment described above, a person may be detected, the danger level to the detected person from the vehicle 100 estimated, and whether or not the detected person is in danger from the subject vehicle 100 estimated based on the estimated danger level, and when a danger is estimated to exist, as shown in the FIG. 17A to FIG. 17G, respectively, the light distribution control device may be controlled so as to reduce the brightness level of light illuminated to a portion of a specific range including the position of the eyes of the person estimated to be in danger.

Further, while explanation has been given of examples in the present exemplary embodiment of the arrow black cut-out patterns 950 and 951, and the character string arrow black cut-out pattern 952, as the reduced brightness level portion, the present invention is not limited thereto. For example, any shape of black cut-out pattern may be used as the reduced brightness level portion, as long as it can be discerned by the driver 200. For example, the black cut-out pattern may be a triangular shape, a square shape, a rectangular shape, or a star shape.

### Explanation of the Reference Numerals

- 110: lights
- 120: camera
- 130: person determination unit
- 140: separation distance sensor
- 150: steering angle sensor
- 160: vehicle speed sensor
- 170: danger level estimation unit
- 175: light drive device
- 190: control device

## Claims

1. An information display device (1), comprising:
a detection unit (130) that detects a person (H1, H2);
a danger level estimation unit (170) that estimates the danger from a subject vehicle (100) of the person (H1, H2) detected by the detection unit (130);
an in-danger estimation unit (170) that estimates whether or not the person (H1, H2) detected by the detection unit (130) is in danger from the subject vehicle (100), based on the danger level estimated by the danger level estimation unit (170);
an illumination unit (110) that illuminates light in the direction of a road surface;
a brightness level reduction unit (175) that reduces the brightness level of light to a part of an illuminated portion of the light on the road surface; and
a control unit (190) that, when estimated to be in danger by the in-danger estimation unit (170), controls the brightness level reduction unit (175) such that information urging the driver of the subject vehicle (100) to be careful is displayed by a black cut-out pattern where the brightness level of light is reduced in an illuminated portion of the light on the road surface,
wherein the control unit (190) is adapted to control various display states of the black cut-out pattern, wherein the display position on the road surface of the black cut-out pattern indicates the direction of the person (H1, H2) from the subject-vehicle (100) and the illumination position thereof moves in sequence from the subject-vehicle (100) towards the person (H1, H2) estimated to be in danger.

2. The information display device (1) of claim 1, wherein the control unit (190) controls the brightness level reduction unit (175) such that the movement speed of the position gets faster as the danger level estimated by the danger level estimation unit (170) gets higher.

3. The information display device (1) of any one of claim 1 and 2, wherein the control unit (190) further controls the brightness level reduction unit (175) such that the movement direction of the person (H1, H2) estimated to be in danger is displayed by the black cut-out pattern.

4. The information display device (1) of claim 1, wherein the control unit (190) controls the brightness level reduction unit (175) such that a line of the black cut-out pattern extending from the subject vehicle (100) to the person (H1, H2), indicating the direction of the person estimated to be in danger, and a line of the black cut-out pattern extending sideways just in front of the person (H1, H2), indicating the separation distance from the subject vehicle (100) to the person (H1, H2), are displayed on the road surface.

5. The information display device (1) of any one of claim 1 and 2, wherein, in order to indicate the direction of the person (H1, H2) estimated to be in danger, the control unit (190) controls the brightness level reduction unit (175) such that the position on the road surface of at least one of the black cut-out pattern(s) moves from the subject vehicle (100) towards the person (H1, H2).

6. The information display device (1) of any one of claim 1 and 2, wherein, in order to indicate the direction of the person (H1, H2) estimated to be in danger and the separation distance to the person (H1, H2), the control unit (190) controls the brightness level reduction unit (175) such that the position on the road surface of at least one of the black cut-out pattern(s) moves from the subject vehicle (100) towards the person (H1, H2), and the black cut-out pattern splits at a point in time when it arrives just in front of the person (H1, H2), and the positions on the road surface of each of the split black cut-out patterns move respectively to the left and right.

7. The information display device (1) of any one of claim 1 and 2, wherein the control unit (190) controls the brightness level reduction unit (175) such that, a line of the black cut-out pattern extending sideways just in front of the person (H1, H2), indicating the separation distance to the person (H1, H2) estimated to be in danger, and at least one of the black cut-out pattern(s) whose position moves on the road surface from the subject vehicle (100) towards the person (H1, H2) in order to indicate the direction of the person (H1, H2), are displayed on the road surface.

8. The information display device of any one of claim 1 to claim 7, wherein the control unit (190) controls the brightness level reduction unit (175) such that as the danger level estimated by the danger level estimation unit (170) gets higher, control is made such that at least one of a shape, an intermittent state, and/or a movement path of the position on the road surface of the black cut-out pattern is controlled to raise the attention grabbing effect.

9. The information display device (1) of any one of claim 1 to claim 8, wherein the control unit (190) further controls the brightness level reduction unit (175) such that, when estimated to be in danger by the in-danger estimation unit (170), the brightness level is reduced of light illuminated to a portion of a specific range including the position of the eyes of the person (H1, H2) estimated to be in danger.

10. The information display device (1) of any one of claim 1 to claim 9, wherein the brightness level reduction unit (175) reduces the brightness level of light to a part of the illuminated portion of light on the road surface by reducing or blocking the light illuminated by the illumination unit (110).

## Patentansprüche

1. Informationsanzeigeeinrichtung (1), enthaltend:
eine Ermittlungseinheit (130), die eine Person (H1, H2) ermittelt;
eine Gefährdungsniveau-Schätzeinheit (170), die die Gefährdung der Person (H1, H2), die von der Ermittlungseinheit (130) ermittelt wird, von einem betroffenen Fahrzeug (100) einschätzt;
eine In-Gefahr-Schätzeinheit (170), die abschätzt, ob die Person (H1, H2), die von der Ermittlungseinheit (130) ermittelt wird, von dem betroffenen Fahrzeug (100) in Gefahr ist oder nicht basierend auf dem Gefährdungsniveau, das von der Gefährdungsniveau-Schätzeinheit (170) geschätzt wird;
eine Beleuchtungseinheit (110), die Licht in die Richtung einer Straßenoberfläche leuchtet;
eine Helligkeitsniveau-Reduziereinheit (175), die das Helligkeitsniveau des Lichts auf einen Teil eines beleuchteten Bereichs des Lichts auf der Straßenoberfläche reduziert; und
eine Steuereinheit (190), die, wenn durch die In-Gefahr-Schätzeinheit (170) geschätzt wird, dass eine Gefährdung vorliegt, die Helligkeitsniveau-Reduziereinheit (175) derart steuert, dass Informationen, die den Fahrer des betroffenen Fahrzeugs (100) zwingen, vorsichtig zu sein, durch ein schwarzes Aussparungsmuster, wo das Helligkeitsniveau des Lichts in einem beleuchteten Bereich des Lichts auf der Straßenoberfläche reduziert ist, angezeigt werden,
wobei die Steuereinheit (190) zum Steuern verschiedener Anzeigezustände des schwarzen Aussparungsmusters angepasst ist, wobei die Anzeigeposition des schwarzen Aussparungsmusters auf der Straßenoberfläche die Richtung der Person (H1, H2) von dem betroffenen Fahrzeug (100) anzeigt und sich die Beleuchtungsposition davon der Reihe nach von dem betroffenen Fahrzeug (100) in Richtung zu der Person (H1, H2), die geschätzt wird, dass sie in Gefahr ist, bewegt.

2. Informationsanzeigeeinrichtung (1) nach Anspruch 1, wobei die Steuereinheit (190) die Helligkeitsniveau-Reduziereinheit (175) derart steuert, dass die Bewegungsgeschwindigkeit der Position schneller wird, wenn das Gefährdungsniveau, das von der Gefährdungsniveau-Schätzeinheit (170) geschätzt wird, höher wird.

3. Informationsanzeigeeinrichtung (1) nach einem der Ansprüche 1 und 2, wobei die Steuereinheit (190) ferner die Helligkeitsniveau-Reduziereinheit (175) derart steuert, dass die Bewegungsrichtung der Person (H1, H2), die geschätzt wird, dass sie in Gefahr ist, durch das schwarze Aussparungsmuster angezeigt wird.

4. Informationsanzeigeeinrichtung (1) nach Anspruch 1, wobei die Steuereinheit (190) die Helligkeitsniveau-Reduziereinheit (175) derart steuert, dass eine Linie des schwarzen Aussparungsmusters, die sich von dem betroffenen Fahrzeug (100) zu der Person (H1, H2) erstreckt, die die Richtung der Person anzeigt, die geschätzt wird, dass sie in Gefahr ist, und eine Linie des schwarzen Aussparungsmusters, die sich direkt vor der Person (H1, H2) seitlich erstreckt, die den Abstand von dem betroffenen Fahrzeug (100) zu der Person (H1, H2) anzeigt, auf der Straßenoberfläche angezeigt werden.

5. Informationsanzeigeeinrichtung (1) nach einem der Ansprüche 1 und 2, wobei, um die Richtung der Person (H1, H2), die geschätzt wird, dass sie in Gefahr ist, anzuzeigen, die Steuereinheit (190) die Helligkeitsniveau-Reduziereinheit (175) derart steuert, dass sich die Position wenigstens eines aus den schwarzen Aussparungsmuster(n) auf der Straßenoberfläche von dem betroffenen Fahrzeug (100) in Richtung zu der Person (H1, H2) bewegt.

6. Informationsanzeigeeinrichtung (1) nach einem der Ansprüche 1 und 2, wobei, um die Richtung der Person (H1, H2), die geschätzt wird, dass sie in Gefahr ist, und den Abstand zu der Person (H1, H2) anzuzeigen, die Steuereinheit (190) die Helligkeitsniveau-Reduziereinheit (175) derart steuert, dass sich die Position wenigstens eines aus den schwarzen Aussparungsmuster(n) auf der Straßenoberfläche von dem betroffenen Fahrzeug (100) in Richtung zu der Person (H1, H2) bewegt und sich das schwarze Aussparungsmuster an einem Punkt zu der Zeit aufteilt, wenn es direkt vor der Person (H1, H2) ankommt und sich die Positionen jedes der aufgeteilten schwarzen Aussparungsmuster auf der Straßenoberfläche entsprechend nach links und rechts bewegen.

7. Informationsanzeigeeinrichtung (1) nach einem der Ansprüche 1 und 2, wobei die Steuereinheit (190) die Helligkeitsniveau-Reduziereinheit (175) derart steuert, dass eine Linie des schwarzen Aussparungsmusters, das sich direkt vor der Person (H1, H2) seitlich erstreckt, die den Abstand zu der Person (H1, H2), die geschätzt wird, dass sie in Gefahr ist, anzeigt und wenigstens eines aus den schwarzen Aussparungsmuster(n), dessen(deren) Position sich auf der Straßenoberfläche von dem betroffenen Fahrzeug (100) in Richtung zu der Person (H1, H2) bewegt, um die Richtung der Person (H1, H2) anzuzeigen, auf der Straßenoberfläche angezeigt werden.

8. Informationsanzeigeeinrichtung nach einem aus Anspruch 1 bis Anspruch 7, wobei die Steuereinheit (190) die Helligkeitsniveau-Reduziereinheit (175) derart steuert, dass, wenn das Gefährdungsniveau, das von der Gefährdungsniveau-Schätzeinheit (170) geschätzt wird, höher wird, eine Steuerung derart durchgeführt wird, dass wenigstens eines aus einer Form, einem unterbrochenen Zustand und/oder einem Bewegungspfad der Position des schwarzen Aussparungsmusters auf der Straßenoberfläche zum Erhöhen des Aufmerksamkeitserfassungseffekts gesteuert wird.

9. Informationsanzeigeeinrichtung (1) nach einem aus Anspruch 1 bis Anspruch 8, wobei die Steuereinheit (190) ferner die Helligkeitsniveau-Reduziereinheit (175) derart steuert, dass, wenn von der In-Gefahr-Schätzeinheit (170) geschätzt wird, dass eine Gefährdung vorliegt, das Helligkeitsniveau des Lichts reduziert, das einen Teil eines spezifischen Bereichs beleuchtet, der die Position der Augen der Person (H1, H2) beinhaltet, die geschätzt wird, dass sie in Gefahr ist.

10. Informationsanzeigeeinrichtung (1) nach einem aus Anspruch 1 bis Anspruch 9, wobei die Helligkeitsniveau-Reduziereinheit (175) das Beleuchtungsniveau des Lichts auf einen Teil des beleuchteten Bereichs des Lichts auf der Straßenoberfläche durch Reduzieren oder Blockieren des Lichts, das von der Beleuchtungseinheit (110) leuchtet, reduziert.

## Revendications

1. Dispositif d'affichage d'informations (1), comprenant :
une unité de détection (130) qui détecte une personne (H1, H2) ;
une unité d'estimation de niveau de danger (170) qui estime le danger d'un véhicule sujet (100) de la personne (H1, H2) détecté par l'unité de détection (130) ;
une unité d'estimation de danger (170) qui estime si la personne (H1, H2) détectée par l'unité de détection (130) est en danger ou non à partir du véhicule sujet (100), sur la base du niveau de danger estimé par l'unité d'estimation de niveau de danger (170) ;
une unité d'éclairage (110) qui éclaire de la lumière dans la direction d'une surface de route ;
une unité de réduction de niveau de luminosité (175) qui réduit le niveau de luminosité de la lumière à une partie d'une portion illuminée de la lumière sur la surface de route ; et
une unité de commande (190) qui, lorsqu'elle est estimée comme étant en danger par l'unité d'estimation en danger (170), commande l'unité de réduction de niveau de luminosité (175) de telle sorte que des informations incitant le conducteur du véhicule sujet (100) à être prudent sont affichées par un motif de découpe noire où la luminosité est réduite dans une partie illuminée de la lumière sur la surface de la route,
où l'unité de commande (190) est adaptée pour commander divers états d'affichage du motif de découpe noir, où la position d'affichage sur la surface de route du motif de découpe noir indiquant la direction de la personne (H1, H2) depuis le véhicule sujet (100) et la position d'éclairage de celle-ci se déplace en séquence du véhicule sujet (100) vers la personne (H1, H2) estimée être en danger.

2. Dispositif d'affichage d'informations (1) selon la revendication 1, dans lequel l'unité de commande (190) commande l'unité de réduction de niveau de luminosité (175) de telle sorte que la vitesse de déplacement de la position augmente à mesure que le niveau de danger estimé par l'unité d'estimation de niveau de danger (170) devient supérieur.

3. Dispositif d'affichage d'informations (1) selon l'une quelconque des revendications 1 et 2, dans lequel l'unité de commande (190) commande en outre l'unité de réduction du niveau de luminosité (175) de telle sorte que la direction de déplacement de la personne (H1, H2) estimée être en danger soit affichée par le motif noir de découpe.

4. Dispositif d'affichage d'informations (1) selon la revendication 1, dans lequel l'unité de commande (190) commande l'unité de réduction de niveau de luminosité (175) de telle sorte qu'une ligne du motif de découpe noir s'étendant du véhicule sujet (100) à la personne (H1, H2), indiquant la direction de la personne estimée être en danger, et une ligne du motif de découpe noir s'étendant sur latéralement juste devant la personne (H1, H2), indiquant la distance séparant le véhicule sujet (100) et la personne (H1, H2), sont affichées sur la surface de la route.

5. Dispositif d'affichage d'informations (1) selon l'une quelconque des revendications 1 et 2, dans lequel, pour indiquer la direction de la personne (H1, H2) estimée être en danger, l'unité de commande (190) commande l'unité de réduction de niveau de luminosité (175) de sorte que la position sur la surface de route d'au moins un des motifs des motifs de découpe noire se déplace du véhicule sujet (100) vers la personne (H1, H2).

6. Dispositif d'affichage d'informations (1) selon l'une quelconque des revendications 1 et 2, dans lequel, pour indiquer la direction de la personne (H1, H2) estimée être en danger et la distance de séparation à la personne (H1, H2), l'unité de commande (190) commande l'unité de réduction de niveau de luminosité (175) de telle sorte que la position sur surface de route d'au moins un des motifs de découpe noire se déplace depuis le véhicule sujet (100) vers la personne (H1, H2), et le motif de découpe noire se divise à un moment où il arrive juste devant la personne (H1, H2), et les positions sur la surface de route de chacun des motifs de découpe noire se déplacent respectivement vers la gauche et la droite.

7. Dispositif d'affichage d'informations (1) selon l'une quelconque des revendications 1 et 2, dans lequel l'unité de commande (190) commande l'unité de réduction de niveau de luminosité (175) de telle sorte qu'une ligne du motif de découpe noire s'étendant latéralement juste devant la personne (H1, H2), indiquant la distance de séparation à la personne (H1, H2) estimée être en danger, et au moins un des motifs de découpe noire dont la position se déplace sur la surface de route du véhicule sujet (100) vers la personne (H1, H2) afin d'indiquer la direction de la personne (H1, H2), sont affichés sur la surface de route.

8. Dispositif d'affichage d'informations selon l'une quelconque des revendications 1 à 7, dans lequel l'unité de commande (190) commande l'unité de réduction de niveau de luminosité (175) de telle sorte que lorsque le niveau de danger estimé par l'unité d'estimation de niveau de danger (170) augmente, la commande est effectuée de telle sorte qu'au moins un élément parmi une forme, un état intermittent et/ou un déplacement de la position à la surface de route du motif de découpe noire est commandé pour augmenter l'effet d'attraction d'attention.

9. Dispositif d'affichage d'informations (1) selon l'une quelconque des revendications 1 à 8, dans lequel l'unité de commande (190) commande en outre l'unité de réduction du niveau de luminosité (175) de telle sorte que, lorsqu'il est estimé comme étant en danger par l'unité d'estimation en danger (170), le niveau de luminosité est réduit de lumière éclairée à une partie d'une plage spécifique incluant la position des yeux de la personne (H1, H2) estimée être en danger.

10. Dispositif d'affichage d'informations (1) selon l'une quelconque des revendications 1 à 9, dans lequel l'unité de réduction de niveau de luminosité (175) réduit le niveau de luminosité de la lumière à une partie de la partie éclairée de la lumière sur la surface de route en réduisant ou bloquant la lumière éclairée par l'unité d'éclairage (110).
